# FASCICULE DE BREVET EUROPEEN

(11) **EP 0 960 751 B1**
(45) Date de publication et mention de la délivrance du brevet: **19.03.2003**
(21) Numéro de dépôt: 99109992.0
(22) Date de dépôt: 21.05.1999
(51) Int. Cl.: B60C 25/132

(54) **Procédé et machine de montage de pneumatiques**
Verfahren und Vorrichtung zur Reifenmontage
Process and apparatus for mounting tyres

(30) Priorité: 25.05.1998 FR 9806571
(43) Date de publication de la demande: 01.12.1999
(73) Titulaire: Compagnie Générale des Etablissements MICHELIN-MICHELIN & CIE, 63040 Clermont-Ferrand Cedex 09 (FR)
(72) Inventeur: Bocquet, Jean-Louis, 63460 Artonne (FR); Carreau, Alain, 63730 Les-Martres-de-Veyre (FR); Meloux, Denis, 63100 Clermont-Ferrand (FR)
(74) Mandataire: Dequire, Philippe Jean-Marie Denis

(56) Documents cités:
- DE-A- 2 049 645
- US-A- 1 850 053
- US-A- 2 546 988
- US-A- 3 734 159
- US-A- 4 621 671
- US-A- 5 141 040

## Description

La présente invention a pour objet un procédé et une machine de montage de pneumatiques sur des roues ; l'invention concerne le montage des pneumatiques de véhicules utilitaires, notamment poids lourds, véhicules agricoles et de manutention. Elle vise plus particulièrement le montage des pneumatiques bourrelet par bourrelet.

Les machines de montage actuelles (US 3 461 938 et 3 978 903) effectuent usuellement simultanément le montage des deux bourrelets du pneumatique par-dessus les rebords de jante de la roue. Dans le cas le plus général des pneumatiques à chambre incorporée, le pneumatique est ensuite amené à un poste de gonflage où les deux bourrelets sont poussés simultanément sur leurs sièges respectifs où ils assurent l'étanchéité avant le gonflage.

On conçoit que ce procédé soumet les bourrelets et les jantes à des efforts considérables qui peuvent les endommager ; on y a remédié, pour ce qui concerne les bourrelets, par l'application d'un liquide lubrifiant sur les sièges de la jante (US 3 658 152) avant l'expansion des bourrelets.

Le brevet US 4 621 671 présente un procédé, selon le préambule de la revendication 1, et une machine, selon le préambule de la revendication 11, de montage des pneumatiques bourrelet par bourrelet sur une roue avec une jante comprenant deux crochets et un creux de gorge. Le procédé de mise en place du premier bourrelet consiste à :
- engager le premier bourrelet autour d'un arc correspondant d'un premier crochet de la jante pour amener cet arc à l'intérieur du pneumatique ;
- disposer un rouleau à une position donnée relativement à l'ensemble roue et pneumatique ; et
- effectuer un déplacement relatif de l'ensemble roue et pneumatique et du rouleau afin de faire pénétrer le reste du premier crochet de jante à l'intérieur du pneumatique et ainsi achever la mise en place de ce premier bourrelet.

Dans ce procédé, la roue est disposée à plat (avec l'axe de la roue vertical), le rouleau est disposé devant l'ensemble pneumatique et roue du côté de l'arc du premier crochet déjà dans le pneumatique et à une distance donnée du plan extérieur P_{c} du premier crochet de la jante, puis le déplacement relatif de l'ensemble roue et pneumatique et du rouleau est une translation telle que la distance entre le rouleau et le plan extérieur P_{c} du premier crochet de la jante reste sensiblement constante et proche de zéro.

Cette machine permet de diminuer de façon sensible les efforts de montage du premier bourrelet dans le creux de gorge des jantes.

Un autre problème concerne les roues actuelles qui sont de plus en plus souvent réalisées en alliage léger, à base d'aluminium, pour être moins lourdes et offrir une plus grande variété de formes. Ces roues présentent une dureté inférieure à celle des jantes en acier et les moyens d'alimentation et de mise en place des machines usuelles sont souvent susceptibles de les endommager par exemple en bloquant les crochets des jantes des roues lors du montage.

La présente invention a pour objet un procédé et une machine de montage des pneumatiques, bourrelet par bourrelet, particulièrement avantageuse avec les roues en alliage léger.

Suivant l'invention, le procédé de montage du premier bourrelet d'un pneumatique sur la jante d'une roue ayant un premier et un second crochets, comprend les étapes suivantes :
- on engage le premier bourrelet autour d'un arc correspondant du premier crochet de jante pour amener cet arc du crochet de jante à l'intérieur du pneumatique ;
- on applique un rouleau de montage contre le flanc du pneumatique opposé au premier bourrelet déjà engagé ;
- on déplace le rouleau de montage et la roue l'un par rapport à l'autre par un mouvement qui écarte le rouleau de montage de l'arc du premier crochet de jante déjà à l'intérieur du pneumatique, ce mouvement ayant une trajectoire arquée par rapport au plan P_{c} du premier crochet de jante et la concavité du mouvement étant tournée du côté de ladite roue, de telle sorte que le premier crochet de jante s'engage progressivement contre le premier bourrelet jusqu'à sa pénétration complète à l'intérieur du pneumatique.

Le fait d'achever le montage du premier bourrelet par ce mouvement relatif entre le rouleau et la roue arquée de concavité tournée vers la roue permet de limiter considérablement les efforts de montage du premier bourrelet sur pratiquement un très grand nombre de types de roues à équiper et d'arriver ainsi à un montage très progressif sans aucun endommagement pour le bourrelet du pneumatique.

Avantageusement, ce mouvement relatif est tel que la distance E entre le plan P_{c} du premier crochet de jante et le rouleau de montage passe par un maximum et on applique le rouleau de montage contre le flanc du pneumatique du côté de l'axe de la roue où le premier crochet est engagé dans le pneumatique.

Selon un mode de réalisation simple, le mouvement relatif entre le rouleau de montage et la roue est une rotation d'axe A disposé extérieurement relativement au plan P_{c}' du second crochet de la jante et désaxé relativement à l'axe de la roue d'une distance D, du côté de la roue opposé à celui de l'arc du premier crochet initialement amené à l'intérieur du pneumatique.

Dans un mode de réalisation préférentiel, après avoir engagé le premier bourrelet autour d'un arc correspondant du premier crochet de jante pour amener ledit arc dudit crochet de jante à l'intérieur du pneumatique :
- on effectue une première rotation d'amplitude α de l'ensemble roue et pneumatique autour de l'axe de rotation A ; puis
- on effectue une translation de l'ensemble roue et pneumatique jusqu'à appliquer le rouleau de montage contre le flanc du pneumatique opposé au premier bourrelet déjà engagé ; et
- on achève la mise en place du premier bourrelet par une rotation de l'ensemble pneumatique et roue jusqu'à un angle β.

Avantageusement, l'angle α est compris entre 30 et 60° et préférentiellement entre 45 et 55°. L'angle β est lui préférentiellement de 90°. Cela permet, après avoir achevé la mise en place du premier bourrelet d'évacuer l'ensemble roue et pneumatique, la roue étant à plat (l'axe de la roue étant vertical).

Il est avantageux de mettre la roue en position verticale avant d'engager le premier bourrelet autour d'un arc correspondant du premier crochet de jante.

Cela a l'avantage de permettre une alimentation manuelle ou automatique des pneumatiques et de réaliser cet engagement très aisément par simple inclinaison du pneumatique.

Avantageusement, la mise en place du second bourrelet est ensuite réalisé au moyen d'une tête tournante montée sur un chariot escamotable puis on évacue l'ensemble monté ainsi obtenu.

L'invention a aussi pour objet une machine de montage de pneumatiques sur des roues comprenant des moyens de transfert des roues à équiper et des ensembles montés, des moyens de mise en place du premier bourrelet de chaque pneumatique et des moyens de mise en place du second bourrelet, dans laquelle les moyens de montage du premier bourrelet comprennent:
- un moyeu auquel on fixe la roue sur laquelle on dépose le pneumatique à monter ;
- un rouleau de montage d'axe R horizontal ; et
- des moyens de déplacement relatif du moyeu et du rouleau de montage caractérisés en ce que ces moyens permettent de rapprocher ledit rouleau de montage du moyeu jusqu'à une distance donnée et d'effectuer une rotation du moyeu d'axe horizontal A parallèle à l'axe du rouleau de montage entre une position verticale du moyeu et une position horizontale du moyeu.

Avantageusement, l'axe A de rotation du moyeu est décalé d'une distance D sous l'axe du moyeu, ledit moyeu étant en position verticale et le moyeu comporte des moyens de fixation de la roue par l'alésage central du disque de ladite roue.

L'utilisation d'une fixation par l'alésage central du disque des roues a l'avantage de positionner de façon très précise les roues relativement au moyeu sans entraîner aucun risque d'endommagement visible de ces roues. Cela est particulièrement important pour des roues en alliage léger qui sont beaucoup plus sensibles aux rayures par exemple.

Avantageusement, la machine de montage selon l'invention comporte des moyens pour identifier le type de roue à équiper. Cela permet notamment de déterminer immédiatement en fonction du type de roue les caractéristiques de réglage à utiliser lors du montage du premier bourrelet.

On va décrire en détail un exemple de réalisation de l'invention donné à titre non limitatif, en se référant au dessin annexé, sur lequel:
- la figure 1 est une vue schématique de dessus de la machine de montage des pneumatiques selon l'invention ;
- la figure 2 présente des moyens de transfert des roues et des ensembles montés ;
- la figure 3 est une vue schématique des moyens de montage du premier bourrelet d'un pneumatique sur une jante de roue ;
- les figures 4a, b, c, d sont des vues schématiques des phases de montage du premier bourrelet sur une jante ;
- la figure 5 est une vue schématique des moyens de montage du second bourrelet d'une pneumatique sur la jante.

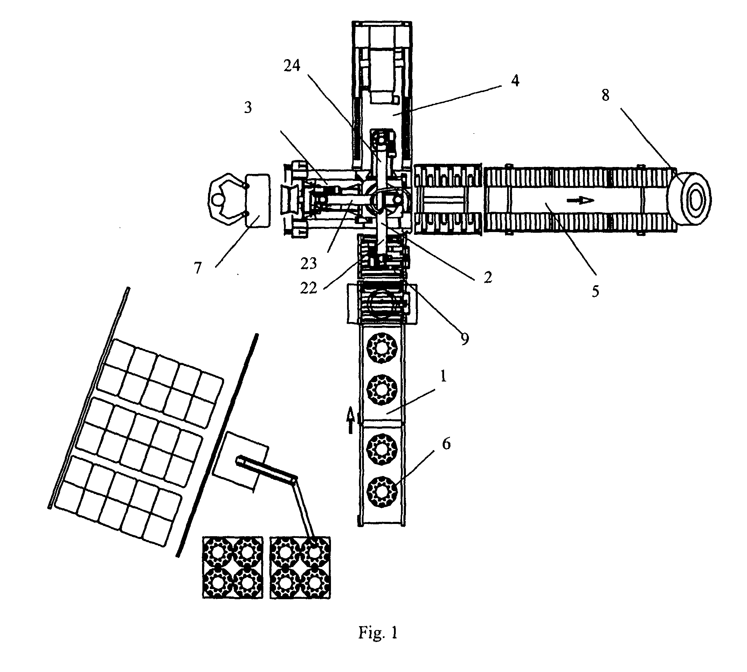

La figure 1 est une vue schématique de dessus d'une machine de montage de pneumatiques sur des roues selon l'invention.

Cette machine comporte un tapis d'alimentation 1 des roues 6 à équiper, un carrousel 2 destiné à transférer les roues 6 et ensembles montés 8 d'un poste de la machine à l'autre, un poste de montage 3 du premier bourrelet des pneumatiques 7, un poste de montage 4 du second bourrelet et un tapis d'évacuation 5 des ensembles montés 8.

Le tapis d'alimentation 1 des roues 6 peut être alimenté manuellement ou automatiquement. Les roues 6 sont disposées à plat (avec leur axe vertical) sur le tapis 1. Le tapis d'alimentation alimente un poste de mesure 9 des roues. Ce poste de mesure 9 permet d'identifier et de contrôler le type de roue à équiper. En fonction du type de roue, les réglages des postes de montage peuvent être modifiés.

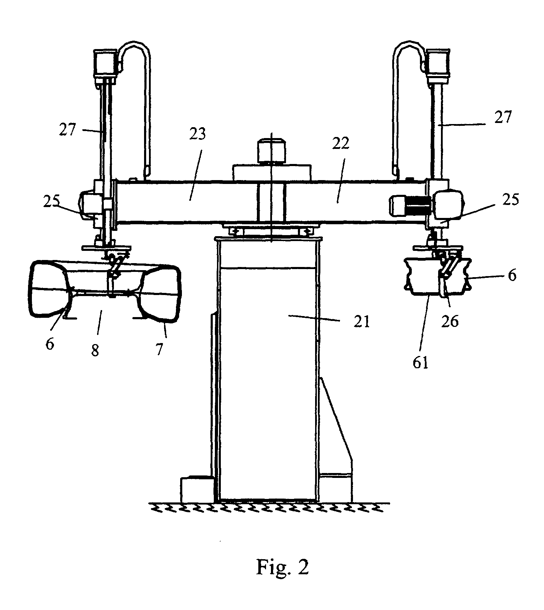

Le carrousel 2 (voir figures 1 et 2) est composé d'un bâti 21 et de trois potences 22, 23 et 24 disposées en forme de T. Chaque potence se termine par un dispositif 25 identique de préhension des roues 6 et des ensembles montés 8 avec des jeux de pièces articulées 26 qui s'insèrent dans l'alésage central des disques 61 des roues 6 avant leur expansion. Chaque dispositif 25 comporte une crémaillère motorisée 27 pour déplacer verticalement le composant transporté. On peut ainsi saisir des roues 6 ayant des diamètres différents, par exemple de 150 à 300 mm.

Ce carrousel 2 peut transporter simultanément trois composants et effectue des rotations alternées de 90°. Cela permet d'amener une roue à équiper, de positionner un ensemble partiellement monté (premier bourrelet), et d'évacuer un ensemble complètement monté (deux bourrelets). Pendant les phases de montage effectif, les potences du carrousel 2 sont en position intermédiaire à 45° des positions de préhension.

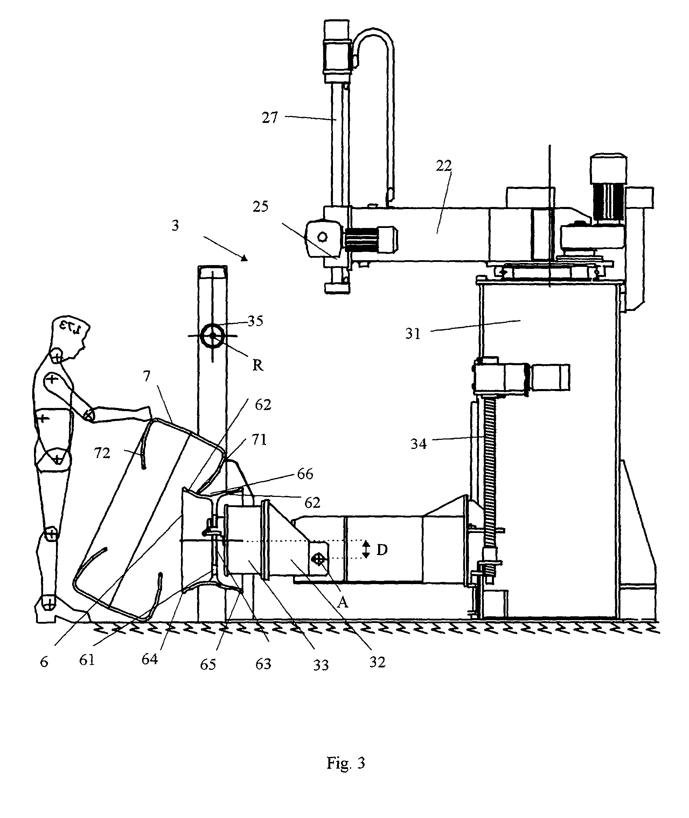

La figure 3 présente un poste de montage 3 du premier bourrelet 71 d'un pneumatique 7. Ce poste 3 comprend un bâti 31 sur lequel est monté un châssis 32 articulé autour d'un axe horizontal A. Ce châssis 32 porte un moyeu 33 sur lequel on peut fixer une roue à équiper 6. Le châssis 32 est mobile en rotation autour de son axe A entre une position verticale (fig. 3 - axe du moyeu horizontal) et une position horizontale (axe du moyeu vertical). Une vis motorisée 34 permet de déplacer verticalement le châssis. Le poste 3 comprend aussi un rouleau de montage 35 d'axe R horizontal et parallèle à l'axe A de rotation du châssis et du moyeu. Le rouleau de montage 35 peut être disposé à des hauteurs variables.

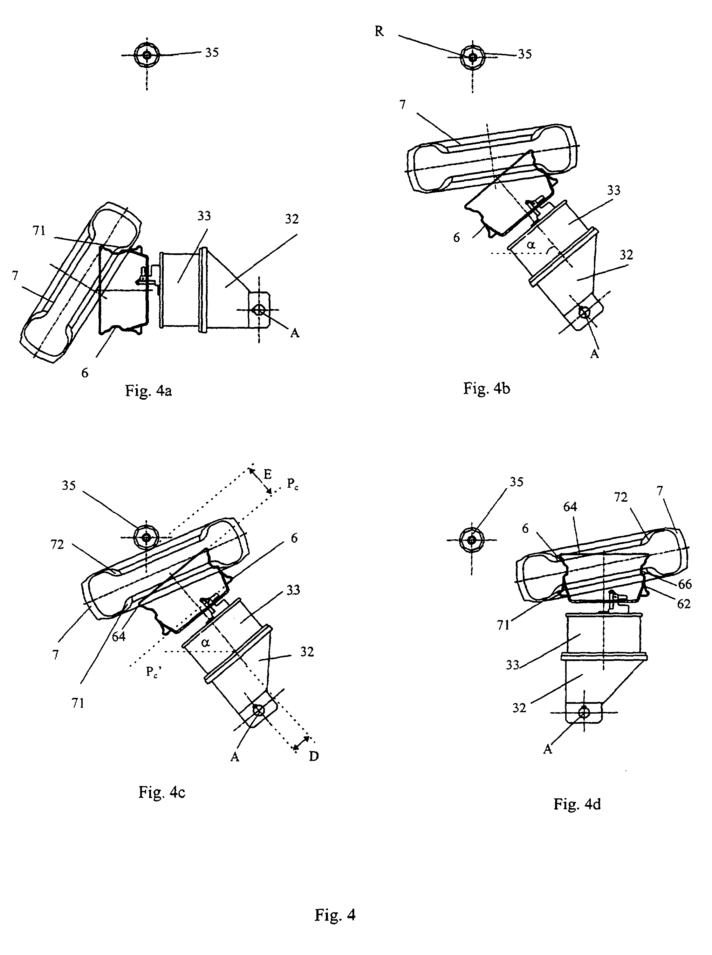

Le procédé de montage du premier bourrelet 71 d'un pneumatique 7 est maintenant expliqué avec l'aide de la figure 3 et des quatre croquis de la figure 4.

La potence 22 saisit une roue 6 sur le poste de mesure du tapis d'alimentation 1 puis effectue une rotation de 90° pour positionner cette roue au-dessus du moyeu 33, placé en position horizontale (axe vertical). La crémaillère 27 dépose la roue 6 sur le moyeu 33 qui fixe la roue fermement et de façon centrée grâce à des moyens connus. La fixation s'effectue à nouveau par l'alésage central 63 du disque 61 de la roue 6.

Le moyeu 33 et le châssis 32 sont alors placé en position verticale (axe horizontal) à une distance appropriée du sol pour qu'un opérateur puisse mettre en place la partie supérieure du premier bourrelet 71 du pneumatique 7 dans la gorge 66 de la jante 62, par-dessus la partie supérieure du premier crochet 64 de la jante 62 de la roue 6, par simple basculement du pneumatique 7, comme c'est indiqué sur la figure 3. Le pneumatique, la roue et le rouleau de montage sont donc dans la position présentée à la figure 4a.

On effectue alors une rotation d'angle α de l'ensemble du châssis 32, du moyeu 33, de la roue 6 et du pneumatique 7, comme indiqué sur la figure 4b, de manière à présenter le pneumatique sous le rouleau de montage 35.

Lorsque l'axe de la roue 6 et du moyeu 33 forme un angle α d'environ 45 à 55° avec l'horizontale, on interrompt la rotation et on effectue une translation verticale de l'ensemble de manière à amener le flanc extérieur du pneumatique contre le rouleau de montage 35 jusqu'à ce que la distance entre le rouleau de montage 35 et le plan P_{c} du premier crochet 64 de la roue 6 soient à une distance E prédéterminée (voir figure 4c). La valeur de ce jeu E est de l'ordre de 70 à 100 mm.

On achève alors la rotation de l'ensemble moyeu 33, roue 6 et pneumatique 7 jusqu'à une position horizontale du moyeu 33 (axe vertical) (figure 4d).

Pendant cette dernière rotation, le rouleau de montage 35 comprime le flanc et le bourrelet extérieur 72 du pneumatique 7 contre le premier crochet 64 de la roue 6 et ainsi fait passer l'ensemble du premier bourrelet 71 par-dessus le premier crochet de jante 64. Cela achève le montage du premier bourrelet 71 du pneumatique 7 sur la jante 62.

Il est à noter que lorsque le rouleau 35 vient en contact et comprime le flanc extérieur du pneumatique 7, il est situé relativement à l'axe de la roue légèrement du côté du premier bourrelet qui est déjà placé dans la gorge 66 de la jante 62.

L'axe A est légèrement désaxé d'une distance D relativement à l'axe de la roue et du moyeu comme indiqué aux figures 3 et 4c. Ce désaxage entraîne une augmentation initiale de la distance E lors du mouvement de rotation de l'ensemble roue et pneumatique contre le rouleau de montage ; la distance E passe ensuite par une valeur maximale. Cette variation de distance E permet au montage de s'effectuer de façon très progressive et régulière ; cela a pour effet de limiter les efforts de montage du premier bourrelet sur le crochet de jante, et d'assurer une bonne mise en place du pneumatique sur la roue.

Bien entendu, la distance E est différente suivant le diamètre du siège de jante : valeurs normalisées de 44,45 - 49,53 - 57,15 cm (17,5 - 19,5 - 22,5 pouces) ou autres.

Lorsque l'angle d'inclinaison de l'axe de la roue atteint 90°, le premier bourrelet a été complètement monté (figure 4d).

L'ensemble partiellement monté de la roue 6 et du pneumatique 7 est ensuite repris par la potence 24 du carrousel 2 et positionné sur le poste de montage 4 du second bourrelet 72.

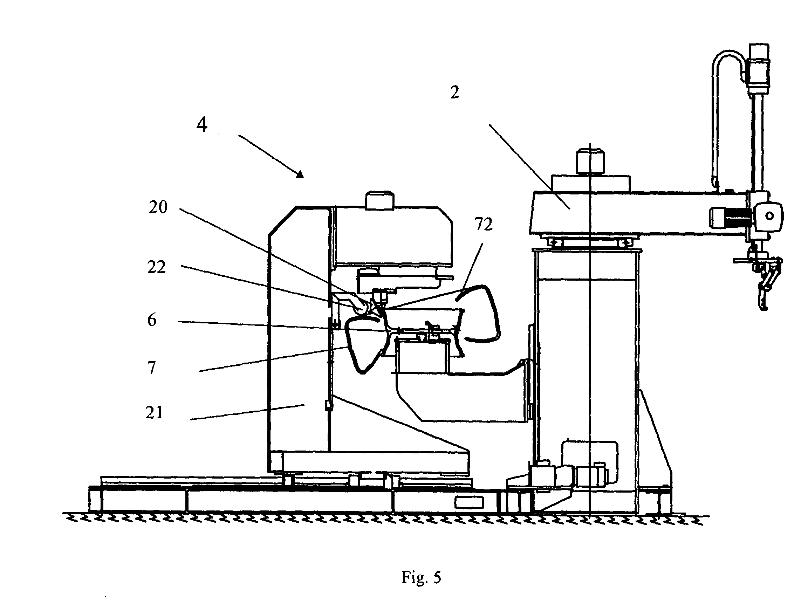

Comme on le voit sur la figure 5, ce poste 4 procède au montage du second bourrelet 72 suivant des procédés de type connu : l'ensemble partiellement monté de la roue 6 et du pneumatique 7 est positionné par le carrousel 2 précédemment décrit de manière à se présenter sous une tête tournante 20 montée sur un chariot escamotable 21 ; ce chariot comporte un système 22 de maintien en position de montage (fond de gorge) et d'arrêt en rotation du pneumatique 7. La tête tournante 20 dispose d'un système de réglage automatique de position suivant les dimensions de la jante.

Le carrousel, saisit enfin l'ensemble monté, pour l'amener au tapis d'évacuation 5.

La machine qui vient d'être décrite peut monter au moins 430 pneumatiques par équipe de 8 heures, soit une moyenne de plus de 50 pneumatiques à l'heure. Elle peut traiter des dimensions de sièges normalisés de 44,45 - 49,53 - 57,15 cm (17,5 - 19,5 - 22,5 pouces) ou autres, et des largeurs de jantes de 13,33 à 45,72 cm (5,25 à 18 pouces). Le diamètre maximal d'un pneumatique que l'on peut monter est de 1250 mm et le poids maximal de l'ensemble monté 180 kg.

Dans l'exemple décrit, l'alimentation des pneumatiques est réalisée de façon manuelle, elle pourrait aussi être automatisée.

La machine et le procédé de montage selon l'invention qui ont été décrits sont particulièrement indiqués pour le montage de pneumatiques pour véhicules poids lourds. Ils peuvent aussi s'appliquer au montage d'autres types de pneumatiques de véhicules utilitaires, notamment agricoles ou de manutention.

## Revendications

1. Procédé de montage du premier bourrelet d'un pneumatique sur la jante d'une roue ayant un premier et un second crochets, dans lequel :
- on engage le premier bourrelet autour d'un arc correspondant du premier crochet de jante pour amener ledit arc dudit crochet de jante à l'intérieur du pneumatique ;
- on applique un rouleau de montage contre le flanc du pneumatique opposé au premier bourrelet déjà engagé ;
- on déplace le rouleau de montage et la roue l'un par rapport à l'autre par un mouvement qui écarte ledit rouleau de montage de l'arc du premier crochet de jante déjà à l'intérieur du pneumatique, ledit mouvement **caractérisé en ce qu'**il a une trajectoire arquée par rapport au plan P_{c} du premier crochet de jante et que la concavité dudit mouvement est tournée du côté de ladite roue, de telle sorte que le premier crochet de jante s'engage progressivement contre le premier bourrelet jusqu'à sa pénétration complète à l'intérieur du pneumatique.

2. Procédé selon la revendication 1, dans lequel le mouvement relatif entre le rouleau de montage et la roue est tel que la distance E entre le plan P_{c} du premier crochet de jante et le rouleau de montage passe par un maximum.

3. Procédé selon l'une des revendications 1 ou 2, dans lequel on applique le rouleau de montage contre le flanc du pneumatique du côté de l'axe de la roue où le premier crochet est engagé dans le pneumatique.

4. Procédé selon l'une des revendications 1 à 3, dans lequel le mouvement relatif entre le rouleau de montage et la roue est une rotation d'axe A disposé extérieurement relativement au plan P_{c}' du second crochet de la jante et désaxé relativement à l'axe de la roue d'une distance D, du côté de la roue opposé à celui de l'arc du premier crochet initialement amené à l'intérieur du pneumatique.

5. Procédé de montage selon la revendication 4, dans lequel, après avoir engagé le premier bourrelet autour d'un arc correspondant du premier crochet de jante pour amener ledit arc dudit crochet de jante à l'intérieur du pneumatique :
- on effectue une première rotation d'angle α de l'ensemble roue et pneumatique autour de l'axe de rotation A ; puis
- on effectue une translation de l'ensemble roue et pneumatique jusqu'à appliquer ledit rouleau de montage contre le flanc du pneumatique opposé au premier bourrelet déjà engagé ; et
- on achève la mise en place du premier bourrelet par rotation de l'ensemble pneumatique et roue jusqu'à un angle β.

6. Procédé de montage selon la revendication 5, dans lequel l'angle α est compris entre 30 et 60 degrés.

7. Procédé de montage selon la revendication 5, dans lequel l'angle α est compris entre 45 et 55 degrés.

8. Procédé de montage selon l'une des revendications 5 à 7, dans lequel l'angle β est égal à 90°.

9. Procédé de montage selon l'une des revendications 1 à 8, dans lequel on met la roue en position verticale avant d'engager le premier bourrelet autour d'un arc correspondant du premier crochet de jante.

10. Procédé de montage d'un pneumatique ayant un premier et un second bourrelets sur la jante d'une roue ayant un premier et un second crochets et un creux de gorge, dans lequel, après avoir mis en place le premier bourrelet selon le procédé de l'une des revendications 1 à 9, on met en place le second bourrelet du pneumatique au moyen d'une tête tournante montée sur un chariot escamotable et on évacue l'ensemble monté ainsi obtenu.

11. Machine de montage de pneumatiques sur des roues comprenant des moyens de transfert (12) des roues (6) à équiper et des ensembles montés (8), des moyens de mise en place (3) du premier bourrelet de chaque pneumatique (7) et des moyens de mise en place (4) du second bourrelet, dans laquelle lesdits moyens de mise en place (3) du premier bourrelet comprennent :
- un moyeu (33) auquel on fixe la roue (6) sur laquelle on dépose le pneumatique (7) à monter ;
- un rouleau de montage (35) d'axe (R) horizontal ; et
- des moyens (34) de déplacement relatif du moyeu et du rouleau de montage **caractérisés en ce que** lesdits moyens permettent de rapprocher ledit rouleau (35) de montage dudit moyeu (33) jusqu'à une distance donnée et d'effectuer une rotation du moyeu d'axe horizontal parallèle à l'axe (R) du rouleau de montage (35) entre une position verticale du moyeu et une position horizontale du moyeu.

12. Machine de montage selon la revendication 11, dans laquelle l'axe (A) de rotation du moyeu (33) est décalé d'une distance D sous l'axe du moyeu, ledit moyeu étant en position verticale.

13. Machine de montage selon l'une des revendications 11 ou 12, dans laquelle ledit moyeu comporte des moyens de fixation de la roue par l'alésage central (63) du disque (61) de ladite roue (6).

14. Machine de montage selon l'une des revendications 11 à 13, comportant des moyens (9) pour identifier le type de roue à équiper.

## Claims

1. A method of mounting the first bead of a tyre on the rim of a wheel having a first and a second flange, in which:
- the first bead is engaged around a corresponding arc of the first rim flange in order to bring said arc of said rim flange inside the tyre;
- a mounting roller is applied against the sidewall of the tyre opposite the first bead already engaged;
- the mounting roller and the wheel are displaced in relation to each other by a movement which separates said mounting roller from the arc of the first rim flange already inside the tyre, said movement [being]
**characterised in that** it has a curved path relative to the plane P_{c} of the first rim flange and that the concavity of said movement is turned on the side of said wheel, so that the first rim flange is progressively engaged against the first bead until it completely enters the tyre.

2. A method according to Claim 1, in which the relative movement between the mounting roller and the wheel is such that the distance E between the plane P_{c} of the first rim flange and the mounting roller passes through a maximum value.

3. A method according to one of Claims 1 or 2, in which the mounting roller is applied against the sidewall of the tyre on the side of the axis of the wheel where the first flange is engaged in the tyre.

4. A method according to one of Claims 1 to 3, in which the relative movement between the mounting roller and the wheel is a rotation of axis A placed outside the plane P_{c}' of the second rim flange and offset from the axis of the wheel by a distance D, on the side of the wheel opposite that of the arc of the first flange initially brought inside the tyre.

5. A method of mounting according to Claim 4, in which, after having engaged the first bead around a corresponding arc of the first rim flange in order to bring said arc of said rim flange inside the tyre:
- a first rotation of angle α of the wheel and tyre assembly is made around the axis of rotation A; then
- a translation of the wheel and tyre assembly is made until said mounting roller is applied against the sidewall of the tyre opposite the first bead already engaged; and
- placement of the first bead is completed by rotation of the tyre and wheel assembly to an angle β.

6. A method of mounting according to Claim 5, in which the angle α ranges between 30 and 60°.

7. A method of mounting according to Claim 5, in which the angle α ranges between 45 and 55°.

8. A method of mounting according to one of Claims 5 to 7, in which the angle β is equal to 90°.

9. A method of mounting according to one of Claims 1 to 8, in which the wheel is placed in vertical position before engaging the first bead around a corresponding arc of the first rim flange.

10. A method of mounting a tyre having a first and second bead on the rim of a wheel having a first and a second flange and a groove, in which, after having set the first bead in place according to the method of one of Claims 1 to 9, the second bead of the tyre is set in place by means of a rotary head mounted on a retractable carriage and then the mounted assembly thus obtained is discharged.

11. A machine for mounting tyres on wheels comprising means (12) for transfer of the wheels (6) to be fitted and for transfer of the mounted assemblies (8), means (3) for setting in place of the first bead of each tyre (7) and means (4) for setting in place of the second bead, in which said means (3) for setting in place of the first bead comprise:
- a hub (33) to which the wheel (6) receiving the tyre (7) to be mounted is fitted;
- a mounting roller (35) of horizontal axis (R); and
- means (34) for relatively displacing the hub and mounting roller,
**characterised in that** said means make it possible to move said hub (33) and said mounting roller (35) closer to a given distance and to rotate the hub of horizontal axis parallel to the axis (R) of the mounting roller (35), between a vertical position of the hub and a horizontal position of the hub.

12. A machine for mounting according to Claim 11, in which the axis (A) of rotation of the hub (33) is offset by a distance D below the axis of the hub, said hub being in the vertical position.

13. A machine for mounting according to one of Claims 11 or 12, in which said hub comprises means for fitting the wheel through the centre bore (63) of the disc (61) of said wheel (6).

14. A machine for mounting according to one of Claims 11 to 13, comprising means (9) for identifying the type of wheel to be fitted.

## Patentansprüche

1. Verfahren zur Montage des ersten Wulstes eines Reifens auf der Felge eines Rades mit einer ersten und zweiten Randumstülpung, worin:
- man den ersten Wulst rund um einen Bogen, der der ersten Randumstülpung der Felge entspricht, in Eingriff bringt, um diesen Bogen der Randumstülpung der Felge in das Innere des Reifens zu bringen;
- man eine Montagewalze gegen die Flanke des Reifens drückt, die dem ersten Wulst, der sich bereits in Eingriff befindet, entgegengesetzt ist; und
- man die Montagewalze und das Rad zueinander durch eine Bewegung versetzt, die die Montagewalze vom Bogen des ersten Randumschlags der Felge, der sich bereits im Inneren des Reifens befindet, entfernt, wobei diese Bewegung **dadurch gekennzeichnet ist, daß** sie eine Bewegungsbahn hat, die bezüglich der Ebene P_{c} des ersten Randumschlags der Felge einen Bogen bildet, und daß die Hohlseite der Bewegung zur Seite des genannten Rades gerichtet ist, so daß sich auf diese Weise der erste Randumschlag der Felge fortlaufend gegen den ersten Wulst bis zu seinem vollständigen Eindringen in das Innere des Reifens in Eingriff bringt.

2. Verfahren nach Anspruch 1, worin die Relativbewegung zwischen der Montagewalze und dem Rad so ist, daß der Abstand E zwischen der Ebene P_{c} der ersten Randumstülpung der Felge und der Montagewalze ein Maximum durchläuft.

3. Verfahren nach einem der Ansprüche 1 oder 2, worin man die Montagewalze gegen die Flanke des Reifens auf der Seite der Achse des Rades andrückt, wo der erste Randumschlag mit dem Reifen in Eingriff getreten ist.

4. Verfahren nach einem der Ansprüche 1 bis 3, worin die Relativbewegung zwischen der Montagewalze und dem Rad eine Drehung um die Achse A ist, die in Bezug auf die Ebene P_{c}' des zweiten Felgenumschlags außenliegt und bezüglich der Achse des Rades um einen Abstand D auf der Seite des Rades versetzt ist, die der des Bogens der ersten Umstülpung entgegengesetzt ist, die anfangs in das Innere des Reifens mitgenommen wurde.

5. Montageverfahren nach Anspruch 4, worin, nachdem man den ersten Wulst um einen Bogen, der der ersten Felgenumstülpung entspricht, in Eingriff gebracht hat, um den genannten Bogen der genannten Umstülpung der Felge in das Innere des Reifens zu verbringen,
- man eine erste Drehung mit der Amplitude α der Baugruppe aus Rad und Reifen um die Drehachse A bewirkt;
- man dann eine Verschiebung der Baugruppe aus Rad und Reifen bis zum Andrücken der Montagewalze gegen die Flanke des Reifens bewirkt, die dem ersten, schon in Eingriff gebrachten Wulst entgegengesetzt ist; und
- man das Einsetzen des ersten Wulstes durch eine Drehung der Baugruppe aus Rad und Reifen bis zu einem Winkel β erzielt.

6. Montageverfahren nach Anspruch 5, worin der Winkel α zwischen 30 und 60 Grad liegt.

7. Montageverfahren nach Anspruch 5, worin der Winkel α zwischen 45 und 55 Grad liegt.

8. Montageverfahren nach Anspruch 5 bis 7, worin der Winkel β 90° beträgt.

9. Montageverfahren nach einem der Ansprüche 1 bis 8, worin man das Rad in vertikale Lage verbringt, bevor man den ersten Wulst in Eingriff rund um einen Bogen verbringt, der der ersten Umstülpung der Felge entspricht.

10. Montageverfahren eines Reifens, der einen ersten und zweiten Wulst aufweist, auf der Felge eines Rades, die bzw. das eine erste und zweite Randumstülpung sowie eine Hohlkehle aufweist, worin man, nachdem man den ersten Wulst nach dem Verfahren eines der Ansprüche 1 bis 9 eingesetzt hat, man den zweiten Wulstes nachfolgend mittels eines rotierenden Kopfes einsetzt, der auf einem einfahrbaren Schlitten angebracht ist, bevor man die montierte, so erhaltene Baugruppe entfernt.

11. Maschine zur Montage von Reifen auf Rädern, mit Mitteln (12) zum Überführen der Räder (6), die auszustatten sind, und der montierten Baugruppen (8), Mitteln (3) zum Aufsetzen des ersten Wulstes eines jeden Reifens (7) und Mitteln (4) zum Aufsetzen des zweiten Wulstes, worin die Mittel (3) zum Aufsetzen des ersten Wulstes die folgenden Merkmale aufweisen:
- eine Nabe (33), auf dem man das Rad (6) befestigt, auf dem man den zu montierenden Reifen (7) aufbringt;
- eine Montagewalze (35) mit horizontaler Achse (R); und
- Mittel (34) zum relativen Versetzen der Nabe und der Montagewalze, die
**dadurch gekennzeichnet sind, daß** es die genannten Mittel gestatten, die genannte Montagewalze (35) der Nabe (33) bis auf einen gegebenen Abstand anzunähern und eine Drehung der Nabe um eine horizontale Achse, die parallel zur Achse (R) der Montagewalze (35) verläuft, zwischen einer vertikalen Lage der Achse und einer horizontalen Lage der Nabe zu bewirken.

12. Montagemaschine nach Anspruch 11, worin die Achse (A) der Drehung der Nabe (33) um einen Abstand D unter der Achse der Nabe versetzt ist, wobei die genannte Nabe sich in einer vertikalen Lage befindet.

13. Montagemaschine nach einem der Ansprüche 11 oder 12, worin die Nabe Mittel zur Befestigung des Rades durch die mittige Bohrung (63) der Scheibe (61) des genannten Rades (6) aufweist.

14. Montagemaschine nach einem der Ansprüche 11 bis 13, mit Mitteln (9), um die Art des auszustattenden Rades zu indentifizieren.
